# EUROPEAN PATENT APPLICATION

(11) **EP 1 274 032 A2**
(43) Date of publication of application: **08.01.2003**
(21) Application number: 02006549.6
(22) Date of filing: 20.03.2002
(51) Int. Cl.: G06F 17/60

(54) **Apparatus, system and method for information providing business**

(30) Priority: 06.07.2001 JP 2001206320
(71) Applicant: Hitachi, Ltd., Chiyoda-ku, Tokyo 101-8010 (JP)
(72) Inventor: Asami, Kazuo, Matsudo-shi, Chiba 271-0076 (JP); Ukai, Seiji, Koganei-shi, Tokyo 184-0003 (JP); Sugawa, Satoshi, Kimitsu-shi, Chiba 299-1151 (JP)
(74) Representative: Beetz & Partner Patentanwälte

(57) **Abstract**

The present invention relates a system and method for information providing business that enhances a value of an information providing business.

The system for information providing business (server) (1) that provides the information (web page information) (HO) of the information provider (O) by way of the provision media (web pages) (HD) on which the information (HO) is placed, the system comprising information value estimating means for estimating a value of the information (HO) of the information provider (O) and privilege awarding means for awarding a privilege (prize money) (PM) to the information provider (O) in accordance with the value of the information (HO).

## Description

### BACKGROUND OF THE INVENTION

The present invention relates to an apparatus for information providing business to be employed for conducting a business of providing information and a method therefor.

In recent years, the Internet has prevailed as a medium for providing information globally in accordance with prevalence of a personal computer (hereinafter referred to as "PC"), a mobile phone and the like. In general, it is possible to access the Internet through a server of an Internet provider, who provides an Internet access service, by signing up an access contract with the Internet provider. Further, it is possible to access the Internet using a mobile phone through a server of a mobile phone seller by holding a contract with the mobile phone seller for an Internet access service that is provided by the mobile phone seller. In this case, the mobile phone seller conducts not only a communication business but also an Internet provider business.

The Internet is a network established by mutually connecting computers around the world, it is possible to access various web sites existing in the computers through the Internet. Therefore, it is possible to obtain various information by viewing web pages in the web sites that are accessible using PC or the like through the Internet. Thus, the Internet can be regarded as a huge database.

In the Internet, there are pay sites from which information is obtainable by paying an information charge and free sites from which information is obtainable as charge-free. Since income of information providers of the pay sites increases with the increase in the number of information provisions, they make efforts to enrich contents of the information so that the information is useful for information receivers. In turn, since information providers of the free sites cannot gain income therefrom, they provide information that they simply wish to publicize rather than that is useful for users.

Further, Japanese Patent Laid-open No. 9-163351 discloses a distribution system utilizing an interactive medium, wherein interactive communication means such as a cable television network or the like is used as a medium for providing information. In the distribution system, a commercial (merchandise information) of a company is provided to viewers via the interactive communication means, and a privilege at the time of purchasing the merchandise is given to the relevant viewer (information receivers) in accordance with viewing data of the commercial.

### SUMMARY OF THE INVENTION

The number of the Internet providers has grown rapidly, and, also, the number of the mobile phone seller for providing the Internet access service with mobile phone is growing in accordance with the explosive prevalence of the Internet. As a result, a competition of procuring contractors for the access service is intensified among the Internet providers and the like, and each of the Internet providers proposes discrimination from other Internet providers by improving the service to be provided to the contractors. Accordingly, it is necessary for each of the Internet providers and the like to develop quality of the information they provided and to enhance a value thereof as a conductor of information providing business. In addition, even if the privilege is given to the viewer as in the distribution system mentioned above, such privileges do not contribute to developments in the quality of the information to be provided.

Hence, an object of the present invention is to provide an apparatus, a system and a method for information providing business that increases a value of the information providing business.

In the system for information providing business for providing information through a provision medium on which information from an information provider is placed, the present invention that achieves the above object estimates a value of the information provided by the information provider and awards a privilege in accordance with the estimated value.

According to the invention, it is possible to enhance the value of the information providing business since the information provider naturally makes efforts to develop quality of the information he/she provides.

### BRIEF DESCRIPTION OF THE DRAWINGS

Fig. 1 is a block diagram of an overall information providing business using a server of an Internet provider according to an embodiment of the present invention;
Fig. 2 is a block diagram of the server shown in Fig. 1;
Fig. 3 is a block diagram of a point database shown in Fig. 2;
Fig. 4 is an example of a display structure of a web page according to an embodiment of the present invention;
Fig. 5 is a flowchart of an overall information providing business conducted by an Internet provider according to the embodiment of the present invention;
Fig. 6 is a flowchart showing a data setting processing for points carried out by the server with respect to a point database according to the embodiment of the present invention;
Fig. 7 is a flowchart showing a point setting processing carried out by the server with respect to the point database according to the embodiment of the present invention; and
Fig. 8 is a flowchart showing a prize money awarding processing carried out by the server according to the embodiment of the present invention with reference to the attached drawings.

### DESCRIPTION OF THE PREFERRED EMBODIMENTS

Hereinafter, the invention will be described by way of examples with reference to the accompanying drawings.

In an information providing business that provides information using a provision medium on which information from an information provider is placed, a system and a method for information providing business of the present invention enhance a value of the information to be provided in order to enhance a value of the business. Accordingly, the system and the method for information providing business of the present invention establish a framework for estimating the value of the information provided by the information provider so that a privilege is given to the information provider in accordance with the value of the information. That is to say, an information provider who desires to gain the privilege makes efforts to enrich contents of the information and to facilitate handling of the information in order to make the information more useful for an information receiver, so that the value of the information is enhanced.

Further, according to the present invention, a part or whole of an advertising rate of an advertisement that is placed on the provision medium in addition to the information is used as one of resources for the privilege. Further, according to the present invention, the provision medium is promptly sent to the information receiver by transmitting the provision medium through a communication medium.

Further, according to the present invention, it is possible to provide information globally and to facilitate a search of the information by using a web page that is publicized on the Internet as the provision medium. In this case, it is possible to judge usefulness of the information from the viewpoint of the information receiver easily by estimating the value of the information based on the number of accesses to the web page.

Further, in the information providing business for providing information of an information provider to an information receiver, by receiving the information of the information provider from an information provider terminal through a communication medium; publicizing the information of the information provider using the provision medium that can be transmitted through the communication medium; and transmitting the provision medium to the information receiver terminal through the communication medium, the system and the method for information providing business of the present invention enhance a value of the information to be provided in order to enhance a value of the business of providing information using the provision medium. Therefore, according to the present invention, the value of the information provided by the information provider is estimated based on the number of times the information is received at the information receiver terminal by way of the provision medium, and a privilege is awarded to the information provider in accordance with the estimated value of the information so that the information provider who provides information of a relatively high value can gain the privilege. That is to say, according to the present invention, usefulness of the information for the information receiver is judged based on the number of the receptions and, therefore, it is possible to give the privilege to the information provider who has enhanced the business value by contributing to an increase in the number of the receptions.

Further, according to the present invention, since a value of information of an information provider is estimated based on a database for setting number of times respective information provided by information providers is received at information receiver terminals, it is possible to administrate data for estimating values of information and to facilitate the estimation of values. Further, according to the present invention, it is possible to secure a business fund by setting the privilege as a prize money obtainable from the advertising rate of the advertisement placed on the provision medium and/or a communication charge refund that is a partial refund of a communication charge of the communication medium. Further, according to the present invention, a questionnaire column is set in the provision medium for an information receiver to write in usefulness of the information in order to estimate a value of information of an information provider in conjunction with the usefulness written in the questionnaire column, thereby reflecting comments from the information receiver to the value of the information. Further, according to the present invention, each of the estimated values of information is converted into points, and respective points obtained in a predetermined period of time are calculated to award a privilege based on the calculated points, so that the privilege is awarded easily in accordance with each of the values of information. Further, according to the present invention, it is possible to inform an information receiver whether or not the information is useful since the number of accesses to a web page publicized on the Internet, which is the provision medium, is displayed on the web page.

In addition, the information providing business is a business for providing information of an information provider using a provision medium; examples of which are an Internet provider business, a mobile phone business that provides an Internet access service, a cable television business, a mail-order business and the like. The provision medium is a viewable medium on which the information of the information providers is placed; examples of which are a web page, a television display, a mail-order catalogue and the like. The value of information is estimated based on its usefulness for information receivers and, in the case where the information is placed on the web page, for example, the value is estimated based on the number of accesses to a web page, access period and so on. The privilege is beneficial to information providers; examples of which are prize money, a commendation, various discounts, various paper money and the like. The communication medium is a medium for transmitting and receiving data of the provision medium; examples of which are a public line such as the ISDN (Integrated Services Digital Network), a private line such as a cable television network, a communication via a quasi-zenithal satellite [HEO (Highly Elliptical Orbit) satellite] and the like.

In the present embodiment, the system and the method for information providing business according to the present invention are applied to a server of the Internet provider and processes performed by the server, respectively, and the Internet provider conducts the information providing business using the server. Therefore, in the present embodiment, the provision medium is a web page and the communication medium is a public line such as the ISDN and the like. Further, according to the present embodiment, since not only the information of the information provider but also an advertisement from an advertiser are placed on the web page, it is possible to use a surplus profit in income from the advertising rate as a resource for the privilege (prize money). Further, in the present embodiment, the value of information of the information provider is estimated based on the number of accesses to the web page, the result of questionnaire with respect to the web page, the access period with respect to the web page and the number of accesses to the web site of the advertisement placed on the web page.

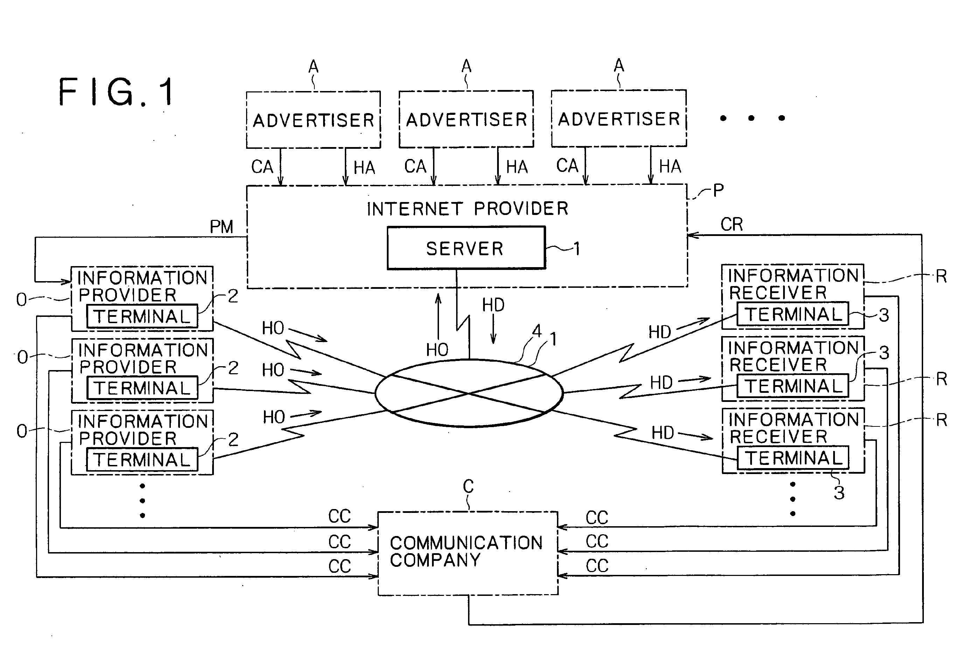

Referring to Fig. 1, there will be described an overall framework of an information providing business using a server 1 of an Internet provider P. Fig. 1 is a block diagram showing an overall information providing business using the server of the Internet provider. Note that there exist many information providers, information receivers and advertisers in reality, i.e., more than those indicated in Fig. 1 wherein respective numbers of an information provider O, an information receiver R and an advertiser A are omitted for brevity.

The server 1 can access a terminal 2 of the information provider O who holds an Internet provider contract with the server 1 on the Internet I via a public line 4. The server 1 can access a terminal 3 of the information receiver R who holds an Internet provider contract with the server 1 on the Internet I via the public line 4.

In the present embodiment, the server 1 corresponds to the system for information providing business recited in the appended claims, and the public line 4 corresponds to the communication medium recited in the appended claims.

The sever 1 receives web page information HO of the information provider O from the terminal 2, and an advertiser A of advertisement information HA that is received by the Internet provider P is inputted by an operator. The server 1 creates a web page HD containing the web page information HO and the advertisement information HA by way of the operator's input and transmits the web page HD to the terminal 3 of the information receiver R in response to a viewer's request. In addition, information provided on the web page HD may be pay information or free information depending on the information provider O.

In the present embodiment, the web page information HO is the information of the information provider recited in the appended claims, and the web page HD is the provision medium recited in the appended claims.

The Internet provider P comprising the server 1 that has the functions described above is a company for providing access to the Internet I, and provides the information of the information provider O and the advertisement of the advertiser A through the Internet I. The Internet provider P holds an advertisement placement contract with the advertiser A and holds a communication charge contract with a communication company C that conducts a communication business using the pubic line 4. The communication company C collects communication charges CC for accessing the server 1 from the information provider O and the information receiver R.

The Internet provider P receives the advertising rates CA from the advertiser A and a communication charge refund CR from the communication company C. The communication charge refund CR is a part of a surplus profit of the communication charges CC paid by the information provider O and the information receiver R, which is to be given as a contribution margin to the Internet provider P who has contributed to the surplus profit. In addition, in the case where no surplus profit occurs, the communication charges refund CR is not given to the Internet provider P.

Further, the Internet provider P receives contract rates, monthly access charges and the like from the information provider O and the information receiver R. However, the contract rate, the monthly access charges and the like are cheap or free since a main income of the Internet provider P is the advertising rates CA. Therefore, it is necessary for the Internet provider P to increase the number of information receivers R who watch the advertisement information HA (i.e. who accesses web pages HD) in order to increase the number of advertisers A and advertising rates CA. Accordingly, it is necessary for the Internet provider P to provide a large quantity of information that is useful for the information receivers R.

The Internet provider P gives prize money PM to an information provider O of the free web page information HO, which is free information, in the case where a value of the web page information HO is relatively high. The prize money is given to the information provider O of the free web page because, while an information provider O of pay web page information HO makes efforts to enrich contents of the web page information HO and to facilitate handling of the information in order to make the information more useful for information receivers R since his/her income increases with an increase in number of accesses to his/her web page HD, the information provider O of the web page information HO of free information cannot obtain income therefrom and, typically, he/she provides web page information HO that he/she simply desires to publicize. In addition, the information receivers R prefer to obtain information for free and, therefore, desire enrichment of information, etc. of the web page HD of free information. It is necessary for the Internet provider P to let the information provider O of free information develop quality (contents and facility for handling the information) of his/her web page information HO in order to increase the number of information receivers R and the number of accesses to the web page HD. Therefore, the Internet provider P prompts the development in the quality of the free web page information HO by introducing a competition among the information providers O of free information by awarding the prize money to each of the information providers O of free information who provide useful information to the information receivers R.

Therefore, the server 1 monthly estimates points of each of the web pages HD of the information providers O of the free information, and award a plurality of series of the prize money PM respectively to the information providers O in accordance with the respective points, amounts of the plurality of series of the prize money being varied in proportion to the numerical values of the points. Thus, the prize money PM is not awarded to an information provider O of a free web page HD that earned relatively low points. In addition, resources for the prize money is a part (for example, 50 %) of the surplus profit (a profit obtainable by subtracting an anticipated profit from a profit of income) in the income of the Internet provider P, and the prize money is not awarded in a month when no surplus profit is gained. The estimation of points and the prize money awarding will be described in detail later in this specification.

In the present embodiment, the points correspond to the value of information recited in the appended claims and the prize money corresponds to the privilege recited in appended the claims.

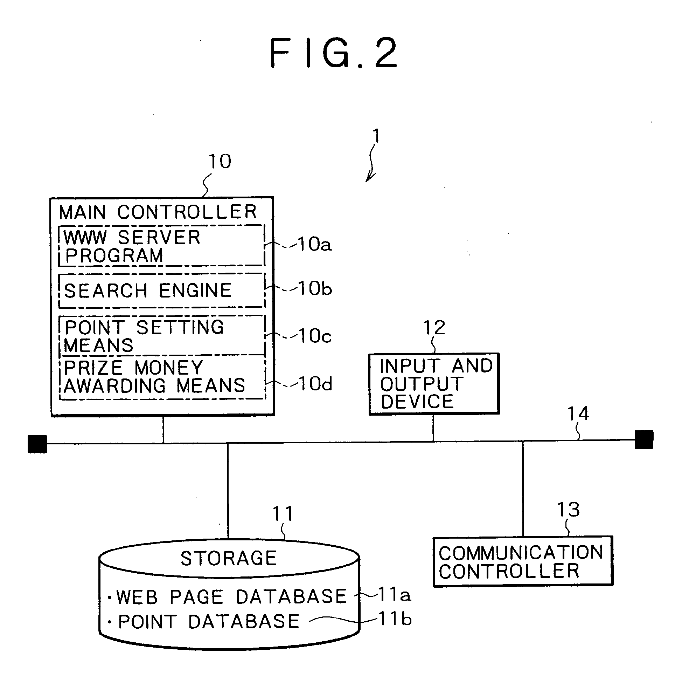

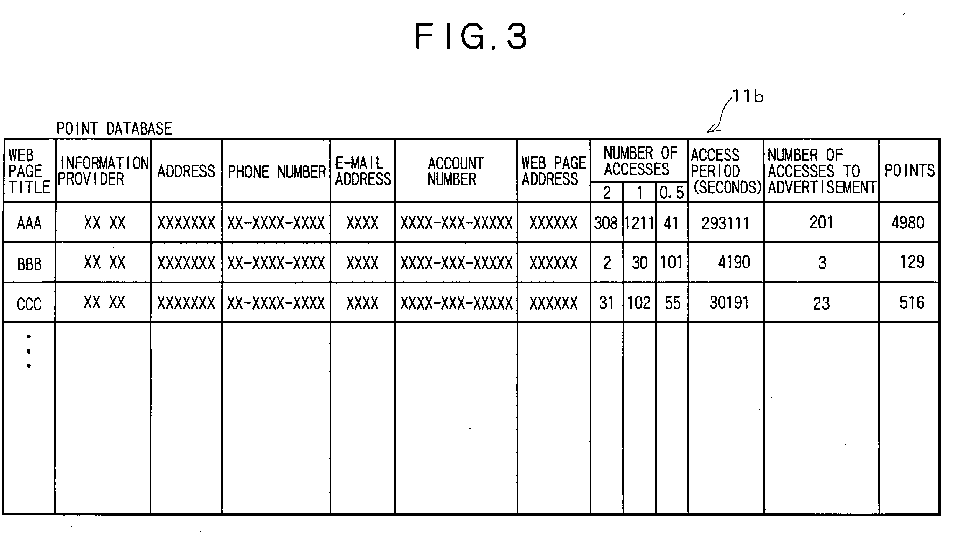

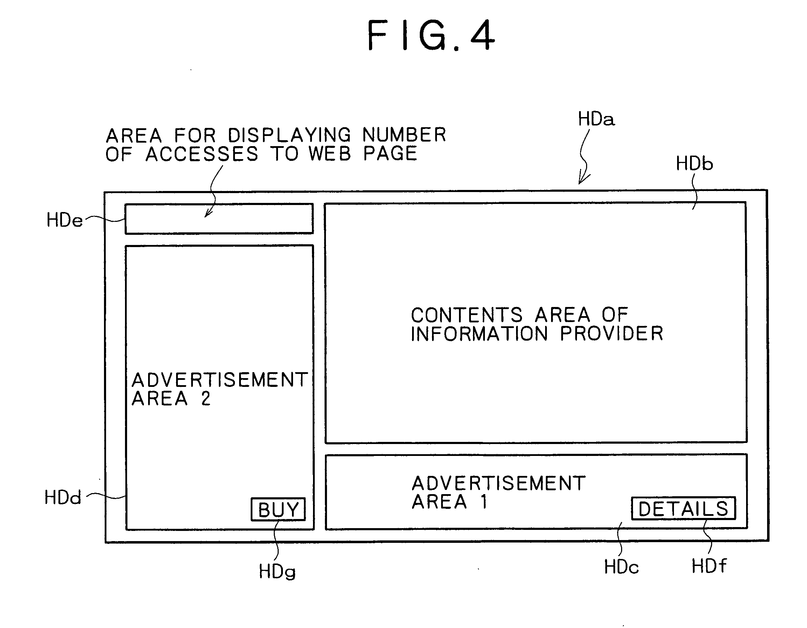

A detailed structure of the server 1 will be described with reference to Figs. 1 to 4. Fig. 2 is a block diagram of the server. Fig. 3 is a block diagram of a point database. Fig. 4 is an example of display structure of a web page.

The server 1 comprises a main controller 10, a storage 11, an input and output device 12, a communication controller 13 and the like, and these devices are connected to one another via a bus 14.

Next, the main controller 10 will be described. The main controller 10 comprises an MPU (Micro Processing Unit), a RAM (Random Access Memory) and the like to supervise and control the server 1. Therefore, the main controller 10 comprises a WWW (World Wide Web) server program 10a.

The WWW server program 10a is a communication program for the communication under HTTP (Hyper Text Transfer Protocol). The WWW server program 10a is downloaded on the RAM when the server 1 is connected to the Internet I and then executed by the MPU.

The main controller 10 provides an information search display for the information receiver R to retrieve desired information when the information receiver R accesses the server 1. Therefore, the main controller 10 comprises a search engine 10b.

The search engine 10b is an information search engine to be used for searching web pages HD provided by the server 1 for desired information. The search engine 10b provides the information search screen to the information receiver R so that the information receiver R can input a key word in an input area of the information search screen. The search engine 10b then searches a web page database 11a of the storage 11 for a web page HD on which the key word is used to extract relevant web pages HD. After that, the search engine 10b displays the number of the extracted web pages HD, a summary of each of the web pages HD and the like on an output area of the information search display. In addition, the information search display is provided with an area for advertisement information HA.

In response to a request for viewing one of the web pages HD displayed on the output area of the information search screen from the terminal 3, the main controller 10 transmits the web page HD stored in the web page database 11a to the terminal 3 through the communication controller 13.

The main controller sets points for each of the web pages HD of the information providers O as a value of the information and award the prize money in accordance with the points. Therefore, the main controller 10 is provided with points setting means 10c and prize money awarding means 10d. The points setting means 10c and the point awarding means 10d will be described in detail after the description of the storage 11 in this specification.

In addition, the points setting means 10c corresponds to the information value estimating means recited in the appended claims, and the prize money awarding means 10d corresponds to the privilege awarding means recited in the appended claims.

The main controller has a function of creating a web page containing web page information HO of an information provider O and advertisement information HA from an advertiser A in the HTML (Hyper Text Markup Language) format and storing the web page in the web page database 11a. As shown in Fig. 4, which an example of a display structure of the web page HD, a web page screen HDa has a content area HDb for placing the web page information HO, which is a large area on an upper right portion of the screen, advertisement areas HDc and HDd in left and bottom portions of the screen for placing the advertisement information HA and HA and an access number display area HDe for displaying the number of accesses to the web page HD. It is possible to change the size and the position of the contents area HDb as well as the numbers, sizes and the positions of the advertisement areas HDc and HDd. Also, it is possible to change the size and the position of the access number display area HDe, while points indicating a value of the information and the like may be displayed in the area HDe. Further, the advertisement areas HDc and HDd may respectively be provided with a link button (for example, a detail button HDf shown in Fig. 4) for entering a web site that contains detailed information of the advertisement or a link button (for example, a purchase button HDg shown in Fig. 4) for entering a web site for purchasing a merchandize advertised in the advertisement.

Further, the web page HD is provided with a questionnaire column for the information receiver R to write in an evaluation for information. For example, the questionnaire column is provided with check blocks for three-stage evaluation of "very useful", "useful" and "not useful" with respect to the information. The results of the evaluation contribute to determination of usefulness of the information for the information receiver R and, therefore, a numerical value of points to be added to the value of the information is varied depending on the evaluation results as described later in this specification.

Next, the storage 11 will be described. The storage 11 comprises a hard disk device, an magneto-optical disk device and the like. The storage 11 stores various programs for the server 1, a web page database 11a, a point database 11b and the like.

The web page database 11a stores HTML-formatted data of the web page HD to be transmitted to the Internet I.

In the point database 11b, there are stored data of the web pages HD of information providers O that are used for setting the plurality of series of points for the values of information on the web pages HD. In order to clarify the usefulness of respective information for the information receivers R by way of a numerical value, data concerning accesses from the information receivers R are utilized for determining the respective values of information of web pages HD. In other words, the numerical value of the points of each of the web pages HD is set based on the number of accesses to the web page HD (to which the results of the questionnaire are added), an access period of the accesses and numbers of accesses to web sites of advertisements.

In the point database 11b, there are stored data for each of the web pages HD such as a title of the web page HD as a key index; data for the information provider consisting of a name, an address, a phone number, an e-mail address and an account number; a web page address as data for the web page HD; number of accesses to the web page HD for setting points thereof; an access period to of the accesses; the number of accesses to advertisements and the points of the web page. In addition, if an identical information provider O sets up a plurality of web pages HD, the data for each of the web pages HD are stored in the point database 11b.

Every time the web page HD is accessed, the result of the questionnaire is added to the value of information of the web page as points in such a manner that 2 points are counted up when the check box of "very useful" is ticked; 1 point is counted up when the check box of "useful" is ticked; and 0.5 point is counted up when the check box of "not useful" is ticked. That is to say, since the value of information is increased with the increase in the usefulness thereof for the information receivers R as described above, the points to be added to the value in estimating the value of information are varied depending on the result of the questionnaire at the time of setting the points. Further, with the increase in the number of accesses to the web pages, opportunity for the advertisement information to be viewed is increased from the viewpoint of the advertiser A and, also, the number of communications is increased from the viewpoint of the communication company C. In addition, 0.5 point is counted up when none of the check box is ticked, taking the result as indifference of the information receiver R to the web page.

Every time the web page HD is accessed, the access period (seconds) thereof is added to the value of the information of the web page HD since the access period indicates a degree of interest of the information receiver R to the information. Further, with the increase in the access period, a period for the advertisement information to be viewed is increased from the viewpoint of the advertiser A and, also, a period of communication is increased from the viewpoint of the communication company C.

The number of accesses to a web site of an advertisement placed in a web page HD is counted up every time the web page HD is accessed. The reason for the counting up is that, from the viewpoint of the advertiser, the number of accesses to the web site of the advertisement indicates an effect of the advertisement.

The points of each of web pages HD are set at the end of every month. The points are set by adding (the number of 2 points accesses x 2), (the number of 1 point accesses × 1), (the number of 0.5 point accesses × 0.5), (access time length/100) and (the number of accesses to advertisements) and then rounding off a sum of the addition to obtain an integral value of the sum. The prize money is awarded after setting the points, and then the number of accesses, the access period of the accesses, the access period to advertisements and the points are initialized to 0.

There will be described the point setting means 10c of the above-described main controller 10. The point setting means 10c has the function of setting the point database 11b. That is to say, the point setting means 10c secures a new field in the point database 11b every time a new web page HD is created and set a web page title, a name of the information provider, his/her address, his/her phone number, his/her e-mail address, his/her account number and a web page address in the field. Every time an information receiver R accesses the web page HD, the point setting means 10c retrieves the web page HD from the point database 11b to set the number of accesses, an access period and the number of accesses to advertisements in the field. Further, the point setting means 10c calculates a plurality of series of points of all the web pages stored in the point database 11b in the manner described above and sets the plurality of series of points respectively to fields of the web pages at the end of every month.

Next, the prize money awarding means 10d will be described. The prize money awarding means 10d has a function of awarding prize money in accordance with each of the plurality of series of points of the web pages HD set in the point database 11b. That is to say, the prize money awarding means 10d judges whether or not there is a surplus profit based on an income from the advertising rates CA, the communication charge refund CR and the like at the end of every month, and calculates total prize money in the case where there is the surplus profit. The prize money awarding means 10d then divides the total prize money into segments in accordance with the points so that the dividends of the total prize money (a plurality of series of prize money) are awarded to information providers of web pages that earned relatively high points, and outputs respective amounts of the prize money and the information providers of the web pages in the form of a list. Lastly, the prize money awarding means 10d initializes the numbers of accesses and the access periods to the access point database 11b, the access periods with respect to advertisements and the plurality of series of points in the point database 11b to 0. Examples of the total prize money awarding method are a method wherein the total prize money is divided into segments at predetermined rates such that 50% thereof is awarded to a web page HD that gained the highest points, 20% thereof is awarded to a web page HD that gained the second highest points and so on; a method wherein the total prize money is distributed equally to web pages HD that gained points of a predetermined value or more; a method wherein web pages HD each of which earned points of a predetermined value or more are selected and the total prize money is divide into segments in accordance with the numerical values of the points to be awarded to the web pages HD; and the like. In addition, in the case where the total prize money is 0 or not more than a predetermined value (for example, not more than 10,000 yen), the prize money is not awarded.

The input and output device 12 comprises a key board, a mouse, a display unit and the like and connected to other devices of the server 1 via an I/O device.

The communication controller 13 comprises a modem, a DSU (Digital Service Unit) and the like and realizes transmission and reception of information though the Internet I.

Next, referring back to Fig. 1., the terminal 2 will be described. The terminal 2 is a terminal that can access the Internet I. For example, the terminal 2 is a PC possessed by the information provider O. The terminal 2 comprises, like the server 1, a main controller, a storage, an input and output device, a communication controller and the like, and these devices are connected to one another via a bus. In addition, the terminal 2 comprises a WWW browser and can view various information retained viewable in various servers (WWW servers) existing on the Internet I. The terminal 2 utilizes the WWW browser to transmit various information to the servers existing on the Internet. From the terminal 2, the web page information HO is transmitted to the server 1. The transmission of the web page HO may be performed at the time of changing contents of the information (for example, when the contents of information is enriched, when the information is made easy for information receivers R to handle, when information requested by information receivers R is added) in addition to when setting up the web page. The web page information HO may be HTML data, word-processed data in various forms, or electronic data such as image data, audio data and the like. The web page information HO may be a sentence or a drawing on papers or the like, a picture, a video tape, an audio tape and the like that can be sent via mail to the provider P.

Next, the information provider O will be described. The information provider O holds a provider contract with the Internet provider P and opens a web page HD for providing information. The information provider O defines the information to be provided to be either free information or pay information in the provider contract. The information provider O defines items regarding advertisements such as an approval for placement of advertisements on the web page HD or a special approval for placement of a specified advertisement on the web page HD in the provider contract. The placement of advertisements on the web page HD under the approval from the information provider O means that the Internet provider P finds advertisers on behalf of the information provider O and that the Internet provider carries out an advertising agency business. In addition, the information provider may be an information receiver R. In the case where a web page HD that does not approve the placement of advertisements gains points that enable the information provider to earn the prize money PM, the prize money in an amount that is less than a regular one may be given to the information provider O of the web page HD since the information contributes to a value of information providing business although the web page does not contribute to advertising.

For example, a person who publishes his/her work such as a novel, a song or the like for free through his/her web page is included in the information providers O. In this case, if the novel or the song gains popularity, the number of accesses to the web page is increased. As a result, a minor artist (the information provider O) can gain the prize money PM and, also, it is possible for the information provider O to be a major artist.

Next, the terminal 3 will be described. The terminal 3 is a terminal that can access the Internet I. For example, the terminal 3 is a PC possessed by the information receiver R. The terminal 3, like the server 1, comprises a main controller, a storage, an input and output device, a communication controller and the like and these devices are connected to on another via a bus. The terminal 3 further comprises a WWW browser to view various information retained viewable in various servers (WWW servers) existing on the Internet. The terminal 3 can transmit various information to the servers existing on the Internet I using the WWW browser.

Next, the advertiser A will be described. The advertiser A holds an advertisement placement contract with the Internet provider P to place an advertisement on a web page HD. The advertiser A defines in the advertisement placement contract the number of web pages on which the advertisement is placed, basic advertising rates in view of a position and a size of an advertising area on a web page, the number of accesses to the web page HD on which the advertisement is placed, an access period of the accesses and the number of accesses to a web site of the advertisement, variable advertising rates in accordance with an actual sales of a merchandize advertised in the advertisement. The advertiser A may specify a desired category (for example, a fashion-related category, a music-related category, a sports-related category, a housewives-oriented category, an working women-oriented category, a student-oriented category and the like) on basis of the information of the web page HD on which the advertisement is to be placed. After holding the contract, the advertiser A submits the advertisement information HA to the Internet provider P. The advertisement information HA may be HTML data, word-processed data in various forms, or electronic data such as image data or audio data, etc. Also, the advertisement information HA may be a sentence or a drawing on papers, a picture, a video tape, an audio tape and the like. The advertiser A pays the advertising rates CA to the Internet provider P based on the number of accesses to the web page on which the advertisement is placed, the access period of the accesses, the number of accesses to the web site of the advertisement and the actual sales.

Next, the communication company C will be described. The communication company C holds a communication contract with the Internet provider P and refunds a part of a surplus profit of an income acquired by communication charges paid for connection between the server 1 and the terminal 2 and between the server 1 and the terminal 3. The communication company C sets a part (for example, 50%) of a profit as the communication charge refund when the profit is higher than an anticipated profit of the income from the communication charges CC. That is to say, when the communication company C gains profit more than they anticipated by the access service of the Internet I though the Internet provider P, the communication company C makes a refund to the Internet provider P who contributed to the profit. In reality, the communication company C is selected independently by the contract between the communication company C and the information provider O or the information receiver R and, therefore, it is unlikely that the above communication charge contract is held. However, due to exacerbation in competition in the communication business, it is possible that the above communication charge contract is held as one of measures for discrimination from competitors. Further, in the case where the communication company C also carries out the provider business, the above communication charge contract is unnecessary.

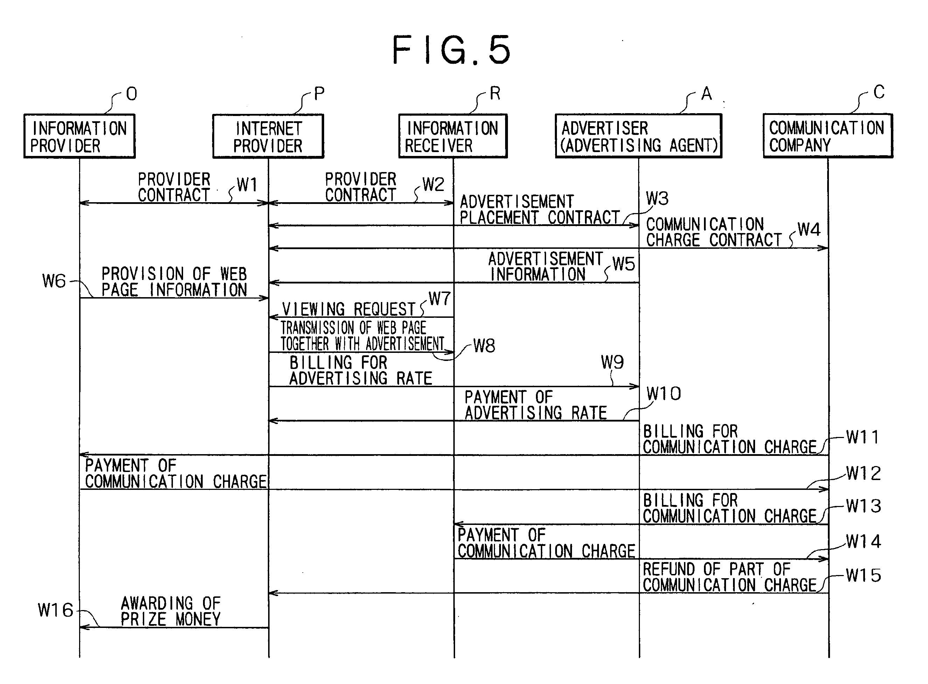

Fig. 5 is a flowchart showing an overall information providing business by way of the Internet provider P. An example of a flow of the overall information providing business by way of the Internet provider P is described along the flowchart of Fig. 5 and with reference to Figs. 1 to 4.

The information provider O who wishes to set up a web page for providing information holds a provider contract with the Internet provider P (W1). In the provider contract, there are defined items such as a placement of advertisement in the web page, prize money, a contract rate, a monthly access charge and the like.

An information receiver R who intends to pick up a service such as information providing service by the Internet provider P holds a provider contract with the Internet provider P (W2). In the provider contract, there are defined items such as contract rates, a monthly access charge and the like.

An advertiser A who intends to place an advertisement on the web page holds an advertisement placement contract with the Internet provider P (W3). In the advertisement placement contract, there are defined basic advertising rates, variable advertising rates, a category of a web page on which the advertisement is to be placed and the like.

The communication company C who collects communication charges from the information provider O and the information receiver R by way of the connection to the server 1 holds a communication charge contract with the Internet provider P (W4). In the communication charge contract, a communication charge refund and the like are defined.

After holding the contract, the advertiser A submits advertisement information HA to the Internet provider P (W5). The information provider O accesses the server 1 of the Internet provider P from the terminal 2 to transmit web page information HO to the server 1 (W6). Then, the Internet provider P creates, by way of operations with respect to the server 1 of an operator, a web page HD on which the web page information HO and the advertisement information HA are placed and stores data for the web page HD in the web page database 11a. Thus, the Internet provider P creates and provides the web page HD with advertisement and carries out the business depending on an income that is obtained mainly from the advertising.

In the case where the information receiver R intends to obtain certain information, he/she accesses the server 1 of the Internet provider P from the terminal 3. The server 1 then transmits the information search screen to the terminal 3. The information receiver R inputs a key word of the information to be obtained in the information search screen. The server 1 then searches the web page database 11a in the storage 11 for a web page HD in which the key word is used to extract relevant web pages HD. Then, the server 1 displays the number of the extracted web pages HD and summaries thereof on an output area of the information search screen. The information receiver R then selects from the output area of the information search screen a web page HD in which the information the information receiver intends to obtain is contained and transmits a request for viewing the web page to the server 1 (W7).

Then, the server 1 retrieves data of the web page HD from the web page database 11a to transmit the web page HD on which an advertisement is placed to the terminal 3 of the information receiver R (W8). The information receiver thus obtains the information and information of the advertisement by viewing the web page HD. Also, in the case where the information that the information receiver R intends to obtain is not contained in the web page HD, he/she transmits a viewing request for another web page HD in the same manner as described above, so that the web page HD is transmitted to him/her. After obtaining the information from the web page HD, the information receiver R answers the questionnaire when he/she likes to do so and then cuts off the connection between the terminal 3 and the server 1. Thus, the Internet provider P provides the information and the advertisement to the information receiver R.

The Internet provider sends a bill for the advertising rates to the advertiser A once a month (W9). In the bill, there are itemized the number of accesses to a web page HD on which an advertisement of the advertiser A is placed, an access period the accesses, the number of accesses to a web site of the advertisement and so on as well as advertising rates calculated based on the numbers of accesses. The advertiser A considers propriety of the advertising rates charged in the bill based on the number of accesses to the web site of the advertisement, an actual sales of a merchandize advertised in the advertisement and the like, and pays the advertising rates if the bill is considered appropriate (W10).

The communication company C sends a bill of communication charge to the information provider O once a month (W11). The bill of communication charge may sometimes include a communication charge for the information provider's telephone rates in addition to a communication charge for connection between the server 1 and the terminal 2 that is itemized thereon. The information provider O pays the communication charge CC to the communication company C (W12). Also, the communication company C sends a bill for communication charge to the information receiver R once a month (W13). The bill of communication charge may sometimes include a communication charge for the information receiver's telephone rates in addition to a communication charge for connection between the server 1 and the terminal 3 that is itemized thereon. The information receiver R pays the communication charge CC to the communication company C (W14).

As described above, the communication company C collects the communication charges CC from the information provider O and the information receiver R. In the case where a surplus profit is generated from the communication charges collected for the connection between the server 1 and the terminals 2 and between the server 1 and the terminal 3 in the communication charges CC, the communication company C calculates the communication charge refund CR as a contribution margin of the Internet provider P to give the communication charge refund CR to the Internet provider P (W15). In the case where there is no surplus profit, the communication charge refund CR will not be given to the Internet provider P.

Lastly, the plurality of series of points for all the web pages HD are calculated at the end of every month at the server 1 of the Internet provider P. Further, in the server 1, total prize money is calculated in the case where the surplus profit is obtained from a total income excluding the advertising rates CC, i.e. from a total income from the communication charge refund CR, the contract rates, the access charges and the like, and the total prize money is divided in accordance with the plurality of series of points the web pages HD based on respective points. The server 1 outputs amounts of the prize money and the relevant information providers O in the form of a list. Then, the prize money PM is awarded to each of the relevant information providers O from the Internet provider P based on the list (W16). The prize money may be awarded to each of the information providers O by way of remittance to bank accounts, cash registration via mail, handing-out and so on. In the case where the surplus profit is not obtained from the total income, the prize money PM is not given to the information providers O.

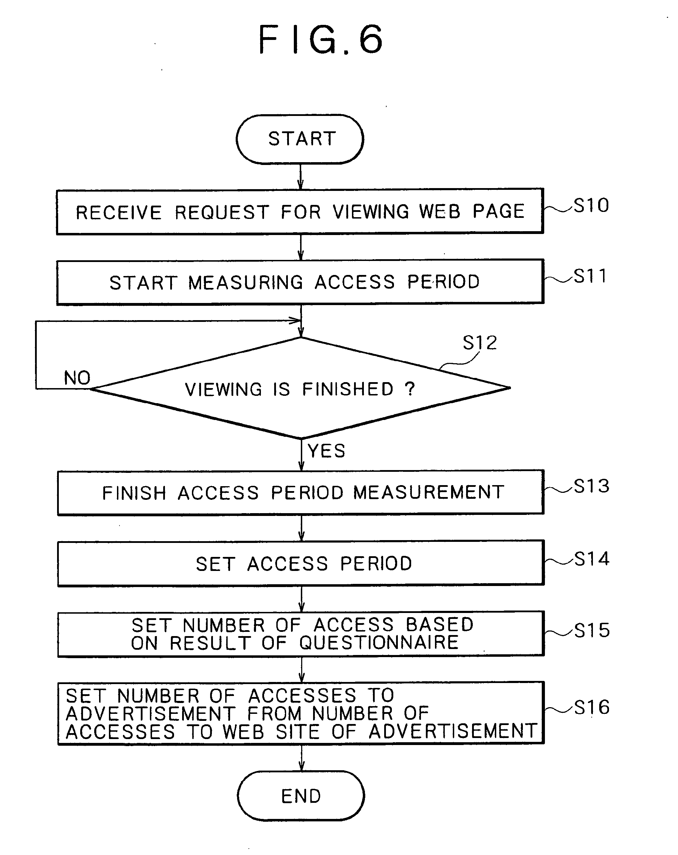

Fig. 6 is a flowchart showing the data setting process with respect to the points to be set in the point database 11b that is performed by the server 1. A data setting process with respect to the points to be set in the point database 11b, which is performed by the server 1, will be described along the flowchart of and with reference to Figs. 1 to 4.

The server 1 receives the request for viewing a web page HD from the terminal 3 of the information receiver R as described above (S10).

The server 1 retrieves data for the web page HD of the viewing request from the web page database 11a to transmit the data for the web page HD to the terminal 3 so that the web page HD is displayed on the display of the terminal 3. At this time, the server 1 starts to measure an access period of the access to the web page HD (S11).

The server 1 then waits until the terminal 3 finishes viewing the web page HD (S12).

When the viewing is finished, the server 1 finishes the measurement of the access period (S13). Then, the server 1 retrieves an access period of previous accesses set in a field of access period of the web page HD from the point database 11b. The server 1 next adds the currently measured access period to the access period of previous accesses and sets the addition of the access periods to the field of access period (S14).

Further, the server 1 retrieves the number of previous accesses set in a field of the number of accesses of the web page HD from the point database 11b, based on results of the questionnaire contained in the web page HD. Then, the server 1 adds 1 point to the number of previous accesses and set the addition of the numbers of accesses in the field of the number of accesses (S15). In addition, the number of accesses is set in such a manner that an addition of 2 points is executed when the result of the questionnaire is "very useful"; an addition of 1 point is executed when the result of the questionnaire is "useful"; and an addition of 0.5 point is executed when the result of the questionnaire is "not useful".

Further, when a web site of the advertisement placed in the web page HD is accessed, the server 1 retrieves the number of previous advertisement accesses set in a field of the number of advertisement accesses of the web page HD from the point database 11b. Then, the server 1 adds the current number of accesses to the number of previous advertisement accesses, and the addition of the numbers of advertisement accesses is set in the field of the number of advertisement accesses (S16). In addition, the number of advertisement accesses is set in such a manner that one access to a web site of advertisement is counted as 1 access; 2 accesses to a web site of advertisement is counted as 2 accesses; one access each to two web sites of advertisements is counted as 2 accesses; and two accesses each to two web sites of advertisements is counted as 4 accesses.

As described above, the server 1 rewrites data for setting the points in the field of the relevant web page HD in the point database 11b every time an information receiver R accesses the web page HD.

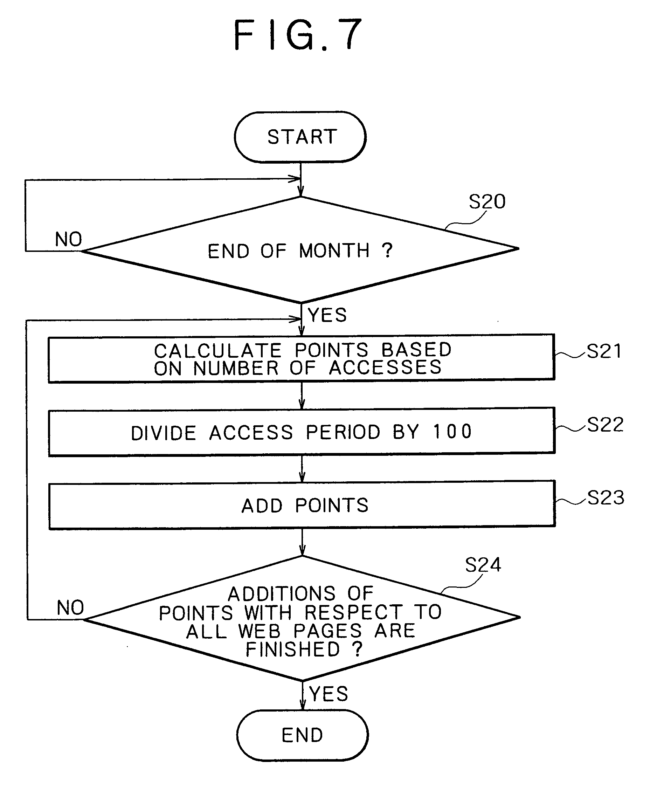

Fig. 7 is a flowchart showing the point setting process in the point database 11b performed by the server 1. A point setting process in the point database 11b that is performed by the server 1 will be described along the flowchart of Fig. 7 with reference to Figs. 1 to 4. There will be described, as a specific example, a case of setting point of a web page HD whose web page title is [AAA] in the point database 11b shown in Fig. 3.

The server 1 set the plurality of series of points of web pages HD registered in the point database 11b at the end of every month. Firstly, the server 1 checks whether its date is the end of a month.

In the case where the date is the end of a month, the server 1 retrieves the data for the number of accesses set in the field of the number of accesses of a web page HD that is registered in the point database 11b and calculates points obtained from the number of accesses based on the data (S21). In the case of the web page HD whose web page title is [AAA], 2 points are gained for 308 times that achieves 616 points; 1 point is gained for 1211 times that achieves 1211 points; and 0.5 point is gained for 41 times that achieves 20.5 points, and, thus, the points obtained by the number of accesses are 1847.5 points.

Further, the server 1 retrieves the data for an access period set in the field the access period of the web page HD, and the data is divided by 100 to determine points obtained from the access period (S22). For the web page HD whose web page title is [AAA], the points obtained from the access period are 2931.11 points that is obtained by dividing 293111 by 100.

Next, the server 1 retrieves the data for the number of advertisement accesses set in the field of the advertisement accesses of the web page HD, and the data is set to be an advertisement accesses points. With the web page HD whose web page title is [AAA], the advertisement accesses points are 201 points. Then, the server 1 adds all the points obtained by the number of accesses, the access period and the advertisement accesses and then a value obtained by the addition is rounded off to set the round-off value in the points database 11b as the points of the web page HD (S23). With the web page whose web page title is [AAA], 4979.61 points are obtained by adding 1847.5 points, 2931.11 points and 201 points, and its round-off points are 4980 points.

The server then performs the above point setting 'process with respect to all the web pages registered in the point database 11b (S24).

As described above, the server 1 clarifies the values of information of the web pages HD by setting points with an integer to facilitate the comparison between the values of information.

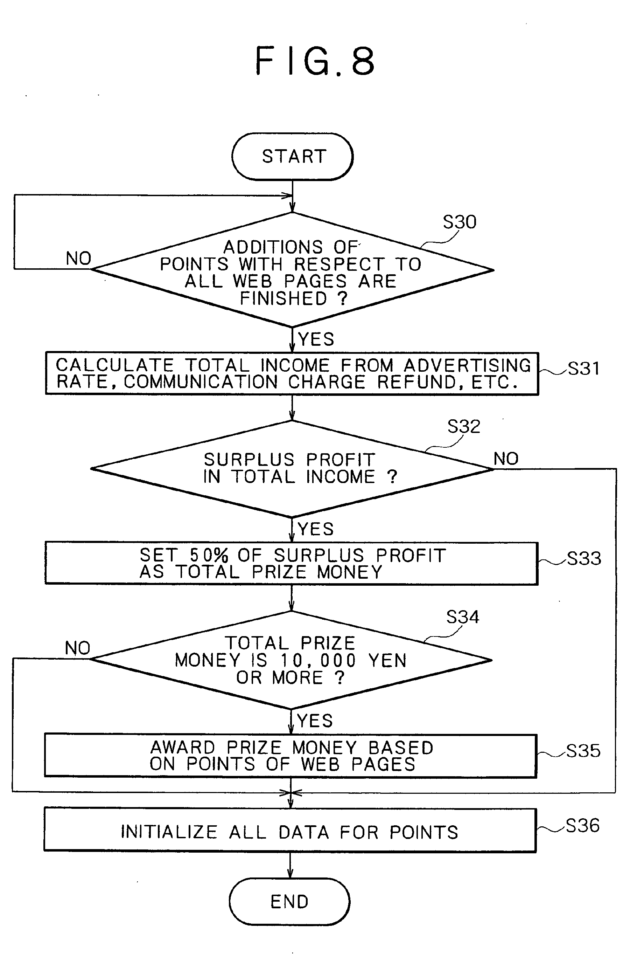

Fig. 8 is a flowchart showing the prize money awarding process performed by the server. A prize money awarding process that is performed by the server 1 will be described along the flowchart of Fig. 8 with reference to Fig. 1 to 4.

The server 1 awards prize money PM based on the points that are set in the point database 11b. Firstly, the server 1 confirms whether or not the points setting processes with respect to all the web pages registered in the point database 11b have been finished (S30). In the case where the processes have been not finished, the process goes back to the points setting process described above.

In the case where the processes have been finished, the server 1 calculates a total income of the Internet provider P from the advertising rates CA from the advertisers A, the contract rates from the information providers O and the information receivers R, the monthly access charges and, in some cases, the communication charge refund CR from the communication company C, etc. (S31).

Then, the server 1 calculates a profit by subtracting costs and so on from the total income to judge whether or not there is the profit (i.e., it is judged whether the calculated value is positive or negative) (S31). In the case where there is the profit, the server 1 subtracts an anticipated profit from the profit to judge if there is a surplus profit (i.e., it is judged whether the calculated value is positive or negative) (S32). In the case where there is no profit or surplus profit, the process moves to the step of S36.

In the case where there is the surplus profit, the server 1 sets 50% of the surplus profit to be total prize money (S33). The total prize money is used for refunding a part of the surplus profit, which is higher than the anticipated profit, to information providers O who contributed to the surplus profit as a contribution margin.

Then, the server 1 judges whether or not the total prize money is 10,000 yen or more (S34). In the case where the total prize money is less than 10,000 yen, the process moves to the step of S36 to avoid frustrating ambition of developing quality of the web page information HO of the information providers O due to a low amount of prize money. In addition, the prize money may be awarded to the information providers even when the total prize money is less than 10,000 yen without carrying out the above judgment, or the criteria prize money may be raised to 100,000 yen or more to increase impact of the prize money.

In the case where the total prize money is 10,000 yen or more, the server 1 compares the respective points of the web pages HD registered in the point database 11b to rank the points in descending order. For example, in Fig. 3, the ranking is in such an order that the web page HD whose web page title is [AAA] (4,980 points), the web page HD whose web page title is [CCC] (516 points) and the web page HD whose web page title is [BBB] (129 points). Next, the server 1 divides the total prize money among the relevant web pages ranked in the descending order according to their points to decide respective amounts of the prize money PM (S35). A method of the prize money awarding is not limited to the above-described one. The server 1 then creates a list wherein the information providers O and the respective prize money PM are indicated and output the list.

Lastly, the server 1 initializes all the data (data for the number of accesses, data for time length of the accesses, data for the number of advertisement accesses and data for points) for the plurality of series of points of all the web pages registered in the point database 11b (S36).

As described above, the server 1 clarifies the order of values of information by ranking the information in descending order according to the points, to thereby clarify criteria for the prize money awarding.

By using the server 1, it is possible to clarify values of information placed on the web pages HD and to compare the values by specifying a numerical value (points) for each of the values using the points setting means 10c. Further, the server 1 enables the prize money to be awarded in accordance with the values of information by comparing the plurality of series of points of the web pages HD and ranking the information of the web pages HD in descending order using the prize money awarding means 10d. Thanks to the prize money awarding, the information providers O try to enhance the value of information by developing the quality of the web page information HO in the aim to gain the prize money. As a result, the quality of information is developed generally by a competition thus introduced among the information providers, and each of the web pages HD grows in a self-promotion manner as a locus for providing information. The value of the information providing business by way of the Internet provider P is thus increased, thereby making it possible for the Internet provider P to achieve discrimination from other network providers. In accordance with the increase in the business value, information providers O and information receivers R who hold provider contracts with the Internet provider P are increased, thereby further increasing the value of the information providing business.

The server 1 also contributes to an increase in an income from the advertising rates CA by placing advertisement information HA on the web page HD. Therefore, a surplus profit is obtained from an increase in a total income of the Internet provider P, which makes it easy to secure the prize money to be awarded for the information providers O. Further, with the increase in the value of information providing business of the Internet provider P, the advertisers who intend to hold advertisement contracts, the advertising rates CA and so on are increased to thereby increase the surplus profit.

Further, since the server 1 transmits information by using the public line 4, it is possible to realize a fast information provision. The Internet provider P may gain an income from the communication charge refund CR from the communication company C who carries out their business by way of the public line 4. The communication charge refund CR is also increased with the increase in the value of the information providing business of the Internet provider P.

Since the server 1 transmits information by using the Internet I by way of web pages HD, it is possible to provide the information globally. Further, the information is placed on the web pages HD and, therefore, it is easy to place the advertisement information HA on the web pages HD and also to change the web page information HO.

Since it is possible to monitor the number of accesses to a web page HD, the access period of the accesses and the like by using the servicer 1, and/or a degree of interest of the information receivers R to the web page HD (usefulness of the information for the information receivers R) can be recognized as a numerical value. Thus, the server 1 can set the value of the information of the web page HD as the numerical value.

According to the present invention, since the prize money is given to respective information providers O who provide free information, especially, it is possible to achieve developments in a quality of free information that have not been expected in the art and/or to increase a possibility for the information receivers R to receive useful information for free. As a result, the information providers O and the information receivers R who intends to hold the provider contracts increase in number.

While the present invention has been described in conjunction with the preferred embodiment thereof, it is evident that the invention is not limited to the embodiment and that the invention includes all possible embodiments that can be embodied within a scope of the appended claims.

For example, each of the plurality of series of points of the web pages HD are set as a value of information based on the number of accesses, the access period of the accesses and the number of advertisement accesses in the present embodiment; however, the value of information can be set estimated based simply on either the number of accesses or the access period of the accesses or by including other information.

The prize money is given as a privilege in the present embodiment; however, the prize money can be substituted by a commendation, paper money, a discount in access charge, contract rates in provider contract to be given from the provider or the like; a prize money, a commendation, paper money, a discount voucher to be given from the advertiser or the like; or a discount voucher to be given by the communication company.

The questionnaire column consists of three-stage evaluation in the present embodiment; however, the questionnaire column may consist of more detailed evaluation items or may include a space for writing in information that is desired to be added, items that is desired to be changed, ease of use and the like in order to make the questionnaire column more beneficial to the information receivers.

The total prize money is so divided to be awarded to a plurality of information providers (web pages) in the present embodiment; however, the total prize money may be given to a sole information provider (a sole web page).

The Internet provider and the communication company are defined as different business proprietors in the present embodiment; however, the businesses are carried out by an identical business proprietor in the case where an Internet access service provider is a mobile phone seller.

An information provider and an information receiver are described as different persons in the present embodiment; however, the information provider may at the same time be the information receiver while the information receiver may at the same time be the information provider in some cases.

The Internet provider and the advertiser are not connected to each other via a communication medium in the present embodiment; however, it is possible to connect terminals of the server and the advertiser on the Internet via a communication line to transmit and receive advertisement information, etc. over the Internet.

The single server is used in the present embodiment; however, it is possible to use a plurality of servers that are connected to one another via a communication line.

The present invention is applied to the information providing business using the server of the Internet provider in the present embodiment; however, it is possible to apply the invention to a mail-order company using an administrative computer of the mail-order company. In that case, a mail-order magazine on which merchandize information is placed substitutes the provision medium, and the information provider is a seller (manufacturer, etc.) who sells merchandizes by the mail-order service. In this case, the mail-order magazine, on which a large quantity of merchandize information that enhances eagerness of purchase of readers of the mail-order magazine is placed, increases a value of the mail-order service provider, the number of subscriber and sales of the merchandizes. Therefore, the value of the merchandize information is estimated based on the number of sales of the merchandize, and resource for a privilege is a surplus profit in an income obtained from mail-order service charges from the sellers. In the administrative computer, each of values of the merchandize information placed on the mail-order magazine is set based on the sales, etc. at a predetermined interval, and the privilege is awarded to the merchandize information in according with the set value. That is to say, the mail-order charge is refunded to sellers who provide merchandize information that is higher in merchandize sales.

According to the present invention as set forth above, it is possible to prompt the information providers to develop the information they provide, thereby enhancing the value of information providing business.

## Claims

1. An apparatus for information providing business for providing information (HO) using a provision medium (HD) on which information (HO) from an information provider (O) is placed, wherein
said apparatus estimates a value of the information (HO) of the information provider (O); and
awards a privilege to the information provider (O) in accordance with the information value.

2. The apparatus for information providing business according to claim 1, wherein the privilege is at least a part or whole of an advertising rate of an advertisement placed in the provision medium (HD).

3. The apparatus for information providing business according to claim 1 or 2, wherein the provision medium (HD) is transmitted through a communication medium.

4. The apparatus for information providing business according to any one of claims 1 to 3, wherein the provision medium (HD) is a web page publicized on the Internet.

5. The apparatus for information providing business according to claim 4, wherein the apparatus estimates the value of information (HO) based on the number of accesses to the web page.

6. A system for information providing business for providing information (HO) of an information provider (O) to an information receiver (R) by receiving the information of the information provider (O) from an information provider terminal (2) through a communication medium; publicizing the information of the information provider (O) using a provision medium (HD) capable of being transmitted through the communication medium; and transmitting the provision medium (HD) to an information receiver terminal (3) through the communication medium, comprising:
information value estimating means for estimating a value of the information of the information provider (O) based on the number of times the information (HO) of the information provider (O) is received at the information receiver terminal (3) by way of the provision medium; and
privilege awarding means (10d) for awarding a privilege to the information provider (O) in accordance with the information value that is estimated by the information value estimating means so as to give the privilege to the information provider (O) if the estimated information value is relatively high.

7. The system for information providing business according to claim 6, further comprising a database for setting number of times the information of the information provider (O) is received at the information receiver terminal (3) by way of the provision medium,
wherein the information value estimating means estimates the value of the information of the information provider (O) based on the database.

8. The system for information providing business according to claim 6, wherein the privilege is prize money (PM) obtainable from the advertising rate of the advertisement placed on the provision medium and/or a communication charge refund (CR) obtainable from a part of a communication charge (CC) of the communication medium.

9. The system for information providing business according to claim 6, wherein the provision medium is provided with a questionnaire column for the information receiver (R) to write in usefulness of information, and
the information value estimating means adds the usefulness written in the questionnaire column to a value of the information of the information provider (O) to estimate the value.

10. The system for information providing business according to claim 6, wherein the information value estimating means converts the value of the information into points and calculates the points at a predetermined interval, and
the privilege awarding means (10d) awards the privilege based on the calculated points.

11. The system for information providing business according to claim 6, wherein the provision medium is a web page publicized on the Internet (I) and number of accesses to the web page is displayed thereon.

12. A method for information providing business for providing information using a provision medium on which information of an information provider (O) is placed, comprising the steps of:
estimating a value of the information of the information provider (O); and
awarding a privilege in accordance with the estimated value of the information.

13. The method for information providing business according to claim 12, wherein the privilege is at least a part or whole of an advertising rate of an advertisement placed on the provision medium.

14. The method for information providing business according to claim 12, wherein the provision medium is transmitted through a communication medium.

15. The method for information providing business according to claim 12, wherein the provision medium is a web page publicized on the Internet (I).

16. The method for information providing business according to claim 15, wherein a value of the information is estimated based on the number of accesses to the web page.

17. A method for information providing business for providing information of an information provider (O) to an information receiver (R) by receiving the information of the information provider (O) at an information provider terminal (2) through a communication medium, publicizing the information of the information provider (O) using a provision medium capable of being transmitted though the communication medium, and transmitting the provision medium to an information receiver terminal (3) through the communication medium, comprising the steps of:
estimating a value of the information of the information provider (O) based on the number of times the information of the information provider (O) is received at the information receiver terminal (3) by way of the provision medium; and
awarding a privilege in accordance with the estimated information value so that the privilege is given to the information provider (O) if the estimated information value is relatively high.

18. The method for information providing business according to claim 17, wherein the value of the information of the information provider (O) is estimated based on a database for setting the number of times the information of the information provider (O) is received at the information receiver terminal (3).

19. The method for information providing business according to claim 17, wherein the privilege is prize money (PM) obtainable from the advertising rate of the advertisement placed on the provision medium and/or a communication charge refund (CR) obtainable from a part of a communication charge (CC) of the communication medium.

20. The method for information providing business according to any one of claims 17, wherein the provision medium is provided with a questionnaire column for the information receiver (R) to write in usefulness of information, and
the value of the information of the information provider (O) is estimated by adding the usefulness written in the questionnaire column.

21. The method for information providing business according to any one of claims 17, further comprising the steps of:
converting the value of the information into points and collecting the points at a predetermined interval; and
awarding the privilege based on the collected points.

22. The method for information providing business according to any one of claims 17, wherein the provision medium is a web page publicized on the Internet (I) and the number of accesses to the web page is displayed thereon.
